# EUROPÄISCHE PATENTSCHRIFT

(11) **EP 3 077 180 B1**
(45) Veröffentlichungstag und Bekanntmachung des Hinweises auf die Patenterteilung: **04.08.2021**
(21) Anmeldenummer: 14811793.0
(22) Anmeldetag: 01.12.2014
(51) Int. Cl.: B29C 64/153, B29C 64/40, B29C 64/393, B33Y 10/00, B33Y 30/00, B33Y 50/02

(54) **VERFAHREN ZUR BESCHLEUNIGTEN HERSTELLUNG VON OBJEKTEN MITTELS GENERATIVER FERTIGUNG**
PROCESS FOR THE ACCELERATED PRODUCTION OF OBJECTS BY MEANS OF GENERATIVE MANUFACTURING
PROCÉDÉ DE PRODUCTION ACCÉLÉRÉE D'OBJETS PAR FABRICATION GÉNÉRATIVE

(30) Priorität: 02.12.2013 DE 102013224693
(43) Veröffentlichungstag der Anmeldung: 12.10.2016
(73) Patentinhaber: EOS GmbH Electro Optical Systems, 82152 Krailling (DE)
(72) Erfinder: PATERNOSTER, Stefan, 82346 Andechs (DE)
(74) Vertreter: Prüfer & Partner mbB Patentanwälte · Rechtsanwälte
(86) Internationale Anmeldenummer: PCT/EP2014/076150
(87) Internationale Veröffentlichungsnummer: WO 2015/082423

(56) Entgegenhaltungen:
- WO-A1-2012/102655
- FR-A1- 2 878 771
- US-A1- 2007 196 561
- None

## Beschreibung

Die vorliegende Erfindung bezieht sich auf ein Verfahren zum schichtweisen Aufbau von dreidimensionalen Objekten mittels generativer Fertigung und eine dazugehörige Vorrichtung. Insbesondere bezieht sich die vorliegende Erfindung auf ein derartiges Verfahren und eine derartige Vorrichtung, durch welche die Herstellungsdauer verkürzt wird.

Verfahren zur schichtweisen generativen Herstellung von dreidimensionalen Objekten sind beispielsweise in EP 1 486 317 B1 beschrieben. Wenn als Ausgangsmaterial für die Herstellung ein Pulver verwendet wird, das durch Einbringen von Wärmeenergie versintert bzw. aufgeschmolzen wird, so läuft der Bauvorgang normalerweise so ab, dass ein CAD-Modell des herzustellenden Objekts angefertigt wird, welches in Schichten zerlegt wird, und nachfolgend das Baumaterial schichtweise entsprechend Querschnitten des CAD-Modells verfestigt wird.

Für jede Pulverschicht läuft der Bauvorgang folgendermaßen ab:
Nach dem Auftragen einer pulverförmigen Baumaterialschicht auf eine bereits verfestigte Schicht wird zunächst die neu aufgetragene Pulverschicht mittels einer Strahlungsheizung auf eine Arbeitstemperatur unterhalb der Temperatur, bei der verfestigt wird, vorgeheizt. Daraufhin richtet man Strahlung (beispielsweise einen Laserstrahl) auf die vorgeheizte Schicht zum selektiven Verfestigen des Baumaterials. Nachdem alle Schichten des Objekts gefertigt sind, lässt man dieses abkühlen und entfernt das Objekt aus dem unverfestigten Pulver, das das Objekt umgibt.

Die soeben skizzierte Herstellungsweise wird in erster Linie zur schnellen Fertigung von Prototypen bzw. Modellen angewendet. Der Vorteil des Verfahrens für die Prototypen- bzw. Modellherstellung ist der, dass das Verfahren die Herstellung von einer großen Bandbreite von Prototypen bzw. Modellen erlaubt, ohne dass mit hohem Aufwand Fertigungswerkzeuge vorher hergestellt werden müssen, die an die Art des jeweils herzustellenden Modells angepasst sind. Im Vergleich zu einem konventionellen Verfahren kann deshalb die Herstellung des Prototypen bzw. Modells in relativ kurzer Zeit erfolgen, weshalb man auch den Begriff "Rapid Prototyping" für diese Art von Verfahren verwendet.

FR 2 878 771 A1 beschreibt ein Lasersinterverfahren, bei dem eine zu verfestigende Schicht in mehreren Durchgängen mittels eines Laserstrahls an zu verfestigenden Stellen bestrahlt wird. Dabei soll bei den wiederholten Bestrahlungsvorgängen das Pulvermaterial am oder nahe dem Schmelzpunkt gehalten werden. Insbesondere wird auch in Betracht gezogen, die wiederholten Bestrahlungsvorgänge mit geringerer Laserenergie durchzuführen.

WO 2012/102655 A1 beschreibt ebenfalls ein Sinter- bzw. Schmelzverfahren, bei dem ein Energiestrahl ausgewählte Bereiche von Schichten zur Herstellung eines Objektes bestrahlt. Hierbei wird eine Berechnung der Temperaturverhältnisse in der zu bestrahlenden Schicht vorgenommen und die Strahlenergie an das Ergebnis der Berechnung angepasst.

US 2007/196561 A1 beschreibt ein Verfahren zur Bewegung des Messbereichs einer Temperaturmessvorrichtung, welche die Temperatur einer mittels Laserstrahlung selektiv zu verfestigenden Schicht in einer Lasersintervorrichtung misst. Dabei kann die Position des Temperaturmessbereichs auf der Schicht unabhängig von der Position des Verfestigungsstrahls auf der Schicht eingestellt werden. Dadurch kann vermieden werden, dass die Temperatur dadurch verfälscht wird, dass die Laserstrahlung die Temperatur in dem Temperaturmessbereich erhöht.

Aufgrund der Universalität eines generativen Fertigungsverfahrens gibt es zunehmend Überlegungen, solch ein Verfahren auch für die Serienfertigung von Produkten einzusetzen. Da man, beispielsweise im Vergleich zu einem Spritzgussverfahren, nicht mehr an das Vorhandensein eines spezifisch an das herzustellende Produkt angepassten Werkzeugs gebunden ist, eignen sich generative schichtweise Fertigungsverfahren insbesondere zur Herstellung von Kleinserien oder aber auch zur Herstellung von individuell angepassten Produkten, da eine Variation der Produktgeometrie und der Produkteigenschaften mit minimalem Aufwand möglich ist. Für diese Art von Serienfertigung hat sich der Begriff "Rapid Manufacturing" durchgesetzt.

Für die Serienfertigung von Objekten müssen insbesondere zwei Randbedingungen erfüllt werden:
Zunächst muss für eine gleichbleibende Produktqualität gesorgt werden. Hier setzt EP 1 486 317 B1 an, indem während der Serienfertigung Testteile mitgebaut werden und vermessen werden.

Weiterhin muss der Fertigungsvorgang beschleunigt werden, da durch den sequentiellen schichtweisen Aufbau ein generatives Fertigungsverfahren naturgemäß langsamer ist als ein konventionelles Verfahren, wie beispielsweise ein Spritzgussverfahren. Hier gibt es in EP 1 896 246 B1 bereits Ansätze zur Verfahrensbeschleunigung. In EP 1 896 246 B1 wird ein Wechselbehälter vorgestellt, in dem das Objekt gefertigt wird und der nach Abschluss des Fertigungsvorgangs der Herstellungsvorrichtung entnommen werden kann, damit die Abkühlung außerhalb der Herstellungsvorrichtung erfolgt und die Herstellungsvorrichtung sofort wieder für einen neuen Fertigungsvorgang zur Verfügung steht.

Auch wenn durch das Verfahren gemäß EP 1 896 246 B1 bereits eine deutliche Beschleunigung des Herstellungsvorgangs erreicht werden kann (der Abkühlvorgang kann einige Stunden in Anspruch nehmen), so wird durch die Vorrichtung in EP 1 896 246 B1 nicht der sequentielle schichtweise Aufbau beschleunigt.

Es ist daher eine Aufgabe der Erfindung, eine Vorrichtung und ein Verfahren bereitzustellen, die eine raschere sequentielle schichtweise Fertigung von Objekten gestatten.

Die Aufgabe wird gelöst durch ein Verfahren nach Anspruch 1 und eine Vorrichtung nach Anspruch 6. Weiterbildungen der Erfindung sind in den Unteransprüchen angegeben.

Der Erfindung liegt die Idee zugrunde, dass die Zeitdauer, die für die Vorerwärmung einer frisch aufgetragenen Pulverschicht auf die Arbeitstemperatur notwendig ist, verringert werden kann, wenn man sich zu Nutze macht, dass sich die Pulverschicht während des Belichtungsvorgangs weiter aufwärmen kann. Da die mechanischen Eigenschaften der Bauteile und deren Geometrie jedoch durch die Temperatur der Pulverschicht zum Zeitpunkt der Belichtung beeinflusst werden, muss bei solch einer Vorgehensweise die bei der Belichtung eingebrachte Wärmeenergie um so größer sein, je stärker die Temperatur der Pulverschicht zum Belichtungszeitpunkt von der Soll-Vorerwärmungstemperatur (Arbeitstemperatur) abweicht. Wenn das Pulvermaterial bei der Verfestigung zu kühl ist, dann findet nur eine unvollständige Verfestigung statt, was beispielsweise die Bruchdehnung der Objekte senkrecht zu den Schichten (in z-Richtung) verringert. Des Weiteren sind die Abmessungen der Bauteile bei zu geringer Vorerwärmungstemperatur kleiner als die Soll-Abmessungen, da ein geringerer Anteil des das herzustellende Objekt umgebenden Pulvers im Randbereich des Objekts mitverfestigt wird.

Nachfolgend wird die Erfindung anhand von Ausführungsbeispielen unter Zuhilfenahme der beigefügten Zeichnungen beschrieben. Von den Figuren zeigen:
- Fig. 1: eine Vorrichtung zur schichtweisen Herstellung von dreidimensionalen Objekten aus einem pulverförmigen Baumaterial gemäß der Erfindung,
- Fig. 2: eine Kurve, welche den Verlauf der z-Bruchdehnung in Abhängigkeit vom Belichtungszeitpunkt für einen Vortest an z-Zugstäben zeigt,
- Fig. 3: eine Kurve, welche die Abhängigkeit der Querschnittsfläche vom Belichtungszeitpunkt für einen Vortest an z-Zugstäben nach DIN ISO 527-1 und DIN-ISO 527-2 Typ 1B zeigt,
- Fig. 4: eine Kurve, welche die zeitliche Abhängigkeit eines Vorfaktors, mit dem die vom Laser emittierte Lichtleistung in einem Zeitraum ab Beginn der Belichtung einer Schicht zu multiplizieren ist, zeigt,
- Fig. 5: eine Kurve, welche den Verlauf der z-Bruchdehnung in Abhängigkeit vom Belichtungszeitpunkt für einen Testlauf mit z-Zugstäben, bei denen die vom Laser emittierte Lichtleistung während eines Zeitraums von 12 Sekunden ab Beginn der Belichtung allmählich erniedrigt wurde, zeigt, und
- Fig. 6: eine Kurve, welche die Abhängigkeit der Querschnittsfläche vom Belichtungszeitpunkt für einen Testlauf mit z-Zugstäben, bei denen die vom Laser emittierte Lichtleistung während eines Zeitraums von 12 Sekunden ab Beginn der Belichtung allmählich erniedrigt wurde, zeigt.

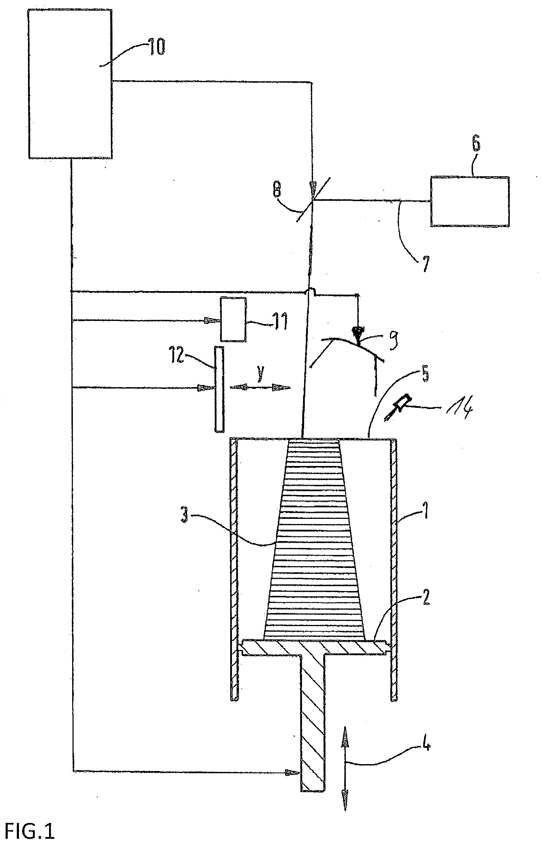

Mit Bezug auf Fig. 1 wird zunächst der Aufbau einer erfindungsgemäßen Vorrichtung zum Herstellen von dreidimensionalen Objekten mittels eines generativen Schichtbauverfahrens beschrieben.

Wie in Fig. 1 gezeigt, wird das herzustellende Objekt 3 auf einer Bauunterlage 2 schichtweise hergestellt. Die Bauunterlage 2 bildet den Boden und ein Rahmen 1 die Seitenwände eines nach oben offenen Behälters, in dem der Bauvorgang stattfindet. Die Bauunterlage 2 ist mit einer Hubmechanik 4 verbunden, die die Bauunterlage in vertikaler Richtung verfahren kann. Der Rahmen 1 umschließt mit seinem oberen Ende ein Baufeld 5, in dem die Verfestigung stattfindet. Oberhalb des Baufelds 5 ist ein Beschichter 11 zum Aufbringen einer Schicht eines Pulvermaterials im Baufeld angeordnet. Als Pulvermaterial können dabei alle mittels Wärmeeintrag verfestigbaren Pulver verwendet werden, beispielsweise Polymerpulver, Metallpulver, Keramikpulver oder aber auch Kompositpulver, die aus verschiedenartigen Materialien zusammengesetzt sind. Des Weiteren können den Pulvern auch Füllstoffe und/oder Additive zugesetzt sein.

Die Fig. 1 zeigt weiterhin schematisch eine Auftragsvorrichtung 12, welche in horizontaler Richtung verfahrbar ist und der Glättung einer aufgetragenen Pulverschicht dient. Weiterhin ist eine Bestrahlungsvorrichtung in Gestalt eines Lasers 6 vorgesehen, der einen Laserstrahl 7 erzeugt, welcher durch eine Ablenkeinrichtung 8 auf beliebige Punkte in dem Baufeld 5 gerichtet werden kann. Durch Einwirkung des Laserstrahls 7 auf das Pulvermaterial im Baufeld kann das Pulvermaterial selektiv erhitzt werden, so dass es sich als Folge an jenen Stellen verfestigt, die einem Querschnitt des herzustellenden Objekts 3 entsprechen.

Weiterhin enthält die erfindungsgemäße Vorrichtung eine Heizvorrichtung 9 oberhalb des Baufelds 5, welche eine neu aufgetragene Pulverschicht auf eine Arbeitstemperatur unterhalb einer Temperatur, bei der die Verfestigung des Pulvermaterials stattfindet, vorheizt. Vorzugsweise handelt es sich bei der Heizvorrichtung (9) um eine Strahlungsheizung (z.B. einer oder mehrere Heizstrahler), die durch Emittieren von elektromagnetischer Strahlung großflächig Wärmeenergie in die neu aufgetragene Pulverschicht einbringen kann. Das Bezugszeichen 10 bezeichnet eine Steuervorrichtung, welche mit dem Laser 6, der Ablenkvorrichtung 8, dem Beschichter 11, der Auftragsvorrichtung 12 und der Hubmechanik 4 verbunden ist, und den Bauvorgang steuert. In Fig. 1 nicht dargestellt ist ein Gehäuse, das den Rahmen 1, die Hubmechanik 4, den Laser 6, die Ablenkeinrichtung 8, den Beschichter 11 und die Auftragsvorrichtung 12 umgibt.

Nachfolgend wird der Ablauf eines erfindungsgemäßen Verfahrens zum schichtweisen generativen Aufbau eines dreidimensionalen Objekts beschrieben:
Zunächst wird die Bauunterlage 2 mittels der Hubmechanik 4 in eine Stellung verfahren, in der die Oberseite der Bauunterlage 2 oder einer auf ihr angeordneten Bauplattform knapp unterhalb der Oberkante des Rahmens 1 liegt. Nachfolgend wird das von dem Beschichter 11 aufgebrachte Pulvermaterial mittels der Auftragsvorrichtung 12 homogen auf der Bauunterlage 2 oder der Bauplattform verteilt. Der eingangs eingestellte vertikale Abstand zur Oberkante des Rahmens 1 definiert dabei die Dicke der aufgebrachten Schicht. Nachfolgend wird eine Wartezeit eingefügt, innerhalb derer die aufgebrachte Pulverschicht mittels der Heizvorrichtung 9 auf eine Arbeitstemperatur unterhalb einer Temperatur, bei der das Baumaterial durch die Einwirkung des Laserstrahls verfestigt wird, vorerwärmt wird. Auch die Heizvorrichtung 9 ist vorzugsweise mit der Steuereinrichtung 10 verbunden. Vorzugsweise wird die Temperatur der vorgeheizten Baumaterialschicht mittels einer Temperaturmesseinrichtung 14 kontrolliert. Bei der Temperaturmesseinrichtung 14 kann es sich um ein Pyrometer handeln, das in einem Bereich des Baufelds 5 die Oberflächentemperatur der aufgebrachten Schicht misst, wobei der Bereich möglichst während der gesamten Herstellung des Objekts 3 außerhalb des Objekts 3 liegen sollte. Sobald die gewünschte Pulverschichttemperatur erreicht ist, wird die Pulverschicht in ihrer dem Querschnitt des Objekts entsprechenden Region durch Eintrag von Wärmeenergie mittels des Laserstrahls verfestigt. Hieraufhin wird die Bauunterlage 2 erneut um den Betrag einer Schichtdicke des Baumaterials abgesenkt, erneut Baumaterial aufgetragen, vorerwärmt, selektiv verfestigt, usw. bis der Herstellvorgang des Objekts abgeschlossen ist.

Erfindungsgemäß wird mit der Verfestigung bereits begonnen, bevor die aufgetragene Pulverschicht die gewünschte Arbeitstemperatur erreicht hat. Wenn z.B. die Arbeitstemperatur bei ca. 175°C liegt, wird erfindungsgemäß schon mit der Verfestigung begonnen, wenn die Pulverschichttemperatur noch ca. 2°C Grad unterhalb der Arbeitstemperatur liegt. Dabei wird aber während eines vorbestimmten Zeitraums ab dem Beginn des Richtens des Laserstrahls 7 auf die innerhalb des Objektquerschnitts liegenden Stellen des Baufelds 5 mehr Wärmeenergie pro Einheitsfläche eingetragen, um die zu niedrige Pulverschichttemperatur zu kompensieren. Hierzu variiert die Steuereinrichtung 10 die Leistungsdichte und/oder Ablenkgeschwindigkeit des Laserstrahls 7, während dieser über die dem Querschnitt entsprechenden Stellen des Baufelds streicht.

Letztendlich wird während eines vorbestimmten Zeitraums, der mit dem Beginn der Verfestigung anfängt, die durch den Laserstrahl 7 in das Material eingebrachte Wärmeenergie pro Einheitsfläche kontinuierlich verringert, da während des vorbestimmten Zeitraums kontinuierlich weitere Wärmeenergie von der Heizvorrichtung 9 in die Pulverschicht eingetragen wird. Beispielsweise wird die emittierte Lichtleistung ϕ des Lasers 6 einer vorgegebenen Funktion f folgend allmählich verringert (ϕ(t) =ϕ₀ · f(t). Die Funktion f(t) kann dabei explizit durch ein Polynom beschrieben sein oder aber mittels in einer Tabelle abgelegten Funktionswerten f(t), die sich in Abhängigkeit von der Zeit ändern, definiert sein. Die Zeit ist dabei die seit Beginn des Belichtungsvorgangs einer Schicht verstrichene Zeit. Der Wert ϕ₀ ist eine bestimmte Grundlichtleistung, deren Wert beliebig gewählt werden kann, weil die Größe von f an die Wahl von ϕ₀ angepasst werden kann (durch Multiplikation von f mit konstantem Faktor).

Nach Ablauf des vorbestimmten Zeitraums wird dann für die restliche Zeitdauer der Belichtung die durch den Laser pro Flächeneinheit eingebrachte Wärmeenergie konstant gehalten, auch wenn dies für die vorliegende Erfindung nicht zwangsweise so sein muss.

Die Funktion, der der Wärmeeintrag pro Einheitsfläche während des vorbestimmten Zeitraums folgt, kann empirisch durch Vortests an Bauteilen oder Prüfkörpern ermittelt werden. Nachfolgend wird ein Verfahren zum Gewinnen einer derartigen Funktion beschrieben:
Zunächst werden in der generativen Schichtbauvorrichtung (beispielsweise der Vorrichtung von Fig. 1) Objekte (z.B. Zugstäbe gemäß ISO 527) in einem Probelauf hergestellt. Hierzu werden z.B. Gruppen von fünf Zugstäben so hergestellt, dass die Gruppen zu unterschiedlichen Zeitpunkten ab dem Beginn der Belichtung einer Schicht belichtet werden. Beispielsweise wird nach dem Verfestigungsvorgang für eine Gruppe eine Wartezeit (beispielsweise 2 Sekunden) eingefügt, bevor die nächste Gruppe belichtet wird. Mit dem Belichtungsvorgang wird dabei begonnen, bevor die gewünschte Arbeitstemperatur erreicht ist, also wie bei der Herstellung der eigentlichen Objekte z.B. bereits dann, wenn die Temperaturmesseinrichtung 14 einen Wert z.B. ca. 2°C unterhalb der gewünschten Arbeitstemperatur anzeigt.

Bei dem Vorversuch ist sicherzustellen, dass die Temperatur der sich an unterschiedlichen Stellen im Bauraum befindenden Probeobjekte (z.B. Gruppen von Zugstäben) nicht durch die Position im Bauraum beeinflusst wird, beispielsweise wenn bei einer Randlage der Wärmeabfluss in die Umgebung des Bauraums größer ist als bei einer Lage im Zentrum des Bauraums.

Nach der Herstellung der Bauteile werden dann die mechanischen Eigenschaften der Zugstäbe gemäß DIN 527-1 und DIN-ISO 527-2 Typ 1B gemessen, wobei Mittelwerte für jede Gruppe gebildet werden. Durch die unterschiedlichen Belichtungszeitpunkte für die unterschiedlichen Gruppen von Zugstäben hat sich bei solch einem Vorversuch die aufgetragene Pulverschicht für die jeweiligen Zugstabgruppen auf unterschiedliche Temperaturen vorerwärmt, wenn eine Verfestigung mit dem Laserstrahl erfolgt. Durch die Analyse der mechanischen Eigenschaften (beispielsweise der z-Bruchdehnung) und der Geometrie (beispielsweise der Querschnittsfläche der z-Zugstäbe) in Abhängigkeit von der Zeit erhält man damit den Einfluss der Vorerwärmungstemperatur auf die mechanischen Eigenschaften und die Geometrie von herzustellenden Objekten.

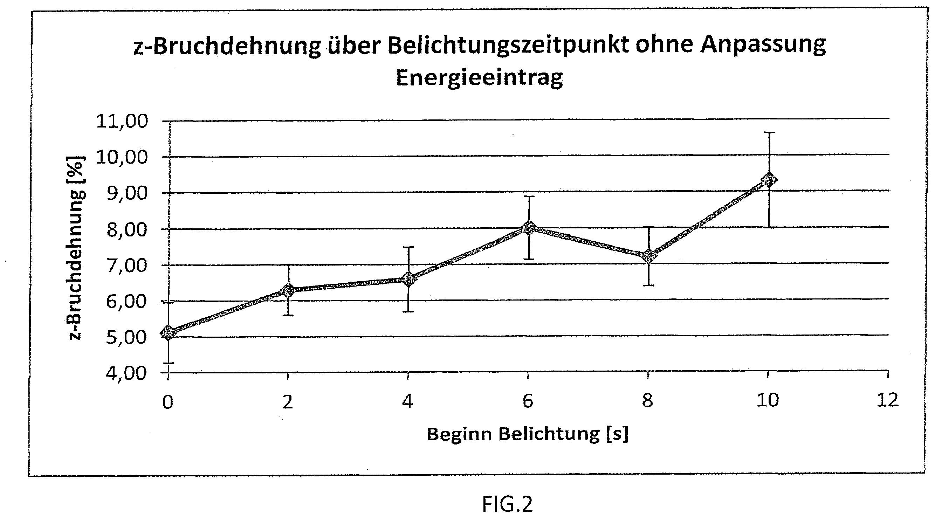

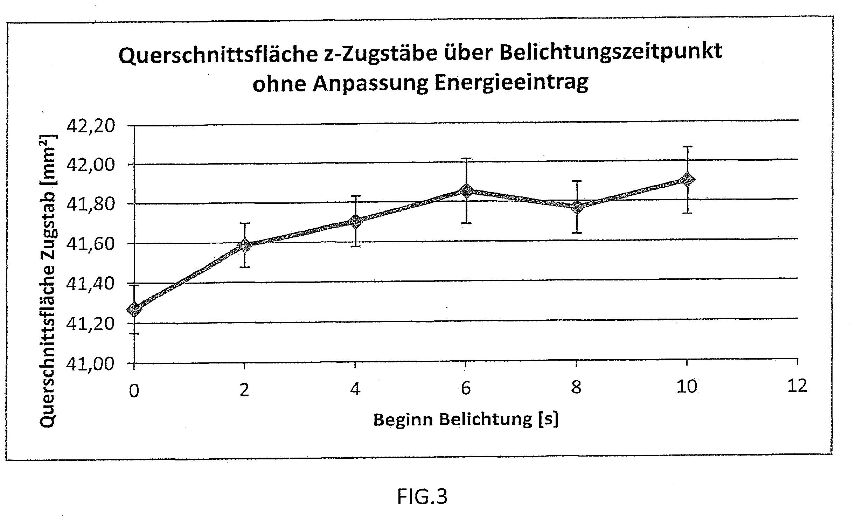

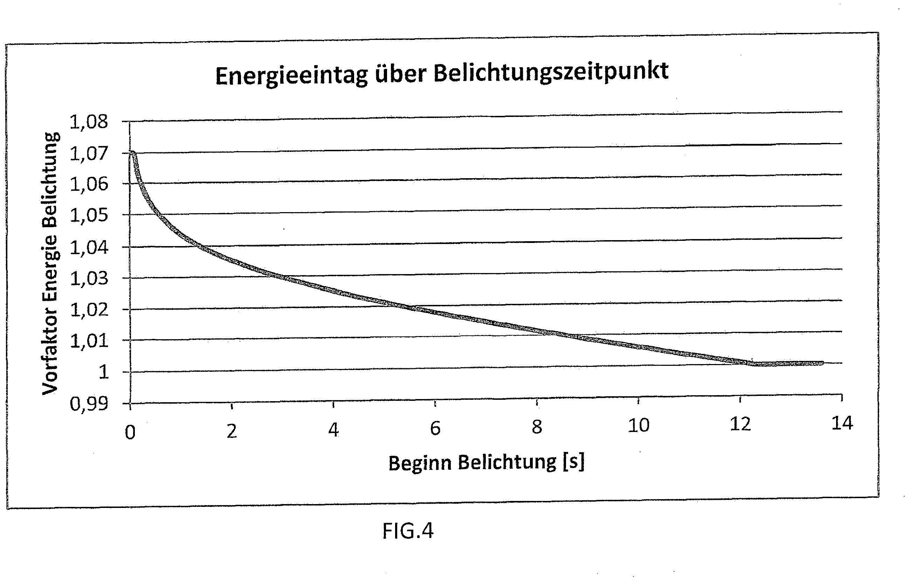

Fig. 2 und 3 zeigen die entsprechenden Kurvenverläufe für die z-Bruchdehnung und die Querschnittsfläche, die bei einem beispielhaften Vortest ermittelt wurden. Anhand solch eines Vortests wird erfindungsgemäß nun für einzelne Zeitpunkte während eines vorbestimmten Zeitraums zu Beginn der Belichtung ein Belichtungsparameter, z.B. die emittierte Lichtleistung, festgelegt und in einer Tabelle abgelegt. Geht man beispielsweise von einem Wert von 1 für die emittierte Lichtleistung ϕ₀ nach Ablauf des vorbestimmten Zeitraums aus, so kann während des vorbestimmten Zeitraums ein Vorfaktor (Funktionswert f(t)) in der Tabelle abgelegt werden, mit dem diese emittierte Lichtleistung ϕ₀ während des vorbestimmten Zeitraums zu multiplizieren ist. Fig. 4 zeigt die zeitliche Abhängigkeit eines derartigen Vorfaktors.

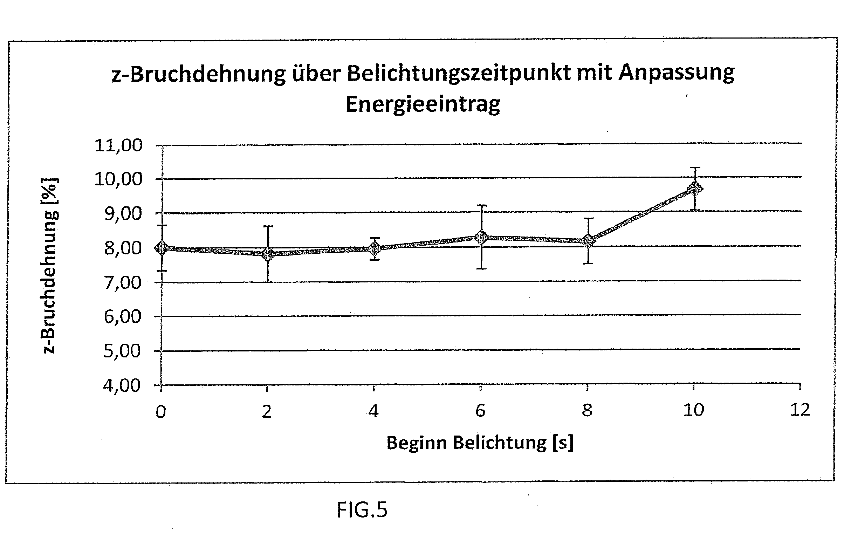

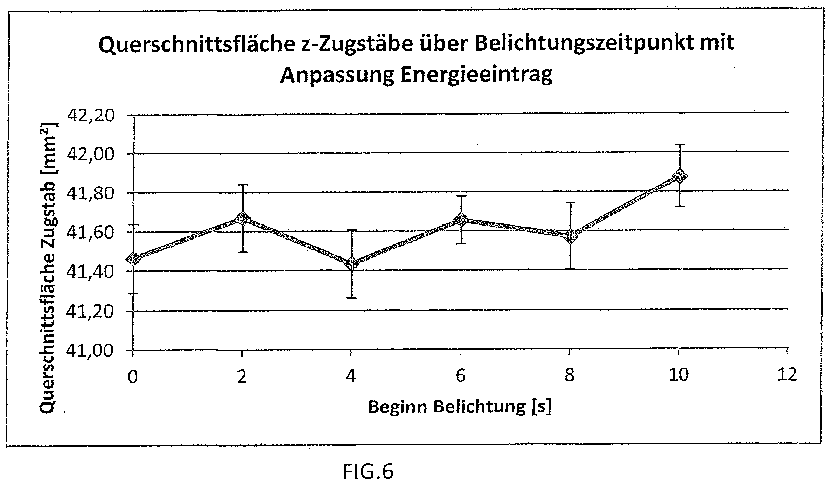

Anhand der Tabellenwerte kann nun die emittierte Lichtleistung während des vorbestimmten Zeitraums entweder schrittweise verringert werden, oder es wird eine monoton fallende Funktion f(t) an die Tabellenwerte angefittet. Fig. 5 und 6 zeigen die z-Bruchdehnung und die Querschnittsfläche eines Testlaufs mit z-Zugstäben, bei denen (bei ansonsten identischen Bauparametern) die emittierte Lichtleistung während eines Zeitraums von 12 Sekunden ab Beginn der Belichtung allmählich erniedrigt wurde. Man erkennt im Vergleich mit den Fig. 2 und 3, dass für die z-Bruchdehnung und die Querschnittsfläche annähernd konstante Werte unabhängig vom Belichtungszeitpunkt erhalten werden.

Natürlich könnte man auch versuchen, mit einer theoretischen Funktion die einzubringende Wärmeenergie pro Einheitsfläche zu Beginn des Belichtungszeitraums zu bestimmen. Allerdings hängt die einzubringende Wärmeenergie vom Pulvermaterial ab und wird zudem durch die Art und Anordnung der Heizvorrichtung 9 mitbestimmt. Daher ist es am zweckmäßigsten, Funktionswerte anhand des beschriebenen Vortests zu ermitteln.

Welche Art von Bauteilen für Vortests verwendet werden, hängt dabei davon ab, welche Eigenschaften an dem eigentlich zu produzierenden Objekt am Wichtigsten sind. Es müssen nicht notgedrungen z-Zugstäbe für Vortests verwendet werden. Man könnte auch alternativ die Tests mit dem eigentlich herzustellenden Objekt durchführen. Da nach den Vortests eine Serienfertigung durchgeführt wird, ist der Aufwand für Vortests akzeptabel im Hinblick auf die dadurch mögliche Zeiteinsparung bei der Serienfertigung.

Es sei auch noch betont, dass man die zu Beginn des Belichtungszeitraums einer Schicht einzubringende Wärmemenge pro Einheitsfläche auch durch Vortests ermitteln kann, bei denen nicht der Einfluss der Pulvervorerwärmungstemperatur auf die mechanischen Eigenschaften und die Geometrie der Vortest-Bauteile, sondern der Einfluss der Pulvervorerwärmungstemperatur auf eine andere Eigenschaft der Vortest-Bauteile, wie z.B. die Oberflächenqualität, ermittelt wird.

Die in das Baumaterial zur Verfestigung eingebrachte Wärmeenergie pro Einheitsfläche muss nicht notwendigerweise durch eine Variation der emittierten Lichtleistung variiert werden. Hier sind auch alternative Vorgehensweisen möglich:
Der Energieeintrag pro Flächeneinheit kann auch dadurch variiert werden, dass die Geschwindigkeit, mit der der Laser über das Baufeld 5 streicht, variiert wird. Je schneller sich der Laserstrahl über das Baufeld 5 bewegt, desto weniger Wärmeenergie pro Zeiteinheit wird in das Baumaterial eingetragen. Zur allmählichen Verringerung der eingebrachten Wärmeenergie pro Einheitsfläche kann also zu Beginn des vorbestimmten Zeitraums der Laserstrahl mit einer geringeren Geschwindigkeit über das Baufeld 5 bewegt werden als nach Ablauf des vorbestimmten Zeitraums. Weiterhin ist die eingebrachte Wärmeenergie pro Einheitsfläche auch vom Abstand der einander benachbarten Spuren des über das Baufeld streichenden Laserstrahls abhängig. Dies bedeutet, durch eine allmähliche Vergrößerung des Abstands von benachbarten Spuren des Laserstrahls 7 kann ebenfalls eine allmähliche Verringerung der in das Material eingebrachten Wärmeenergie pro Einheitsfläche erreicht werden.

Ferner sei noch betont, dass die emittierte Lichtleistung bei einem gepulsten Betrieb durch eine Änderung der Frequenz oder des Tastverhältnisses variiert werden kann.

In allen beschriebenen Fällen regelt die Steuereinrichtung 10 die entsprechenden Parameter in Abhängigkeit von der Zeit.

Geht man bei der Serienfertigung der Objekte so vor, dass die Kontur eines jeweiligen Objektquerschnitts und das Innere des Querschnitts separat verfestigt werden, so ist die oben beschriebene Anpassung der eingebrachten Wärmeenergie pro Einheitsfläche entsprechend für die Konturbelichtung bzw. die Belichtung des Querschnittsinneren anzuwenden, je nachdem, ob die Kontur oder das Querschnittsinnere zuerst belichtet werden. Bei einer Weiterentwicklung des erfindungsgemäßen Verfahrens wird nicht nur die eingebrachte Wärmeenergie pro Einheitsfläche variiert, sondern während des vorbestimmten Zeitraums wird ebenfalls der "beam offset" angepasst. Der Beam-Offset bezeichnet einen Betrag, um den der Laserstrahl an der Kontur des Objekts nach innen versetzt wird, um u.a zu berücksichtigen, dass aufgrund der Wärmeleitung auch das Pulver unmittelbar außerhalb des zu verfestigenden Bereichs mitverfestigt wird, wodurch sich die Objektabmessungen ändern. Dementsprechend wird zu Beginn des Belichtungszeitraums ein geringerer Beam-Offset gewählt und dieser Beam-Offset während des vorbestimmten Zeitraums allmählich erhöht.

Die Länge des vorbestimmten Zeitraums, während dessen die eingetragene Wärmeenergie pro Einheitsfläche allmählich erniedrigt wird oder der Beam-Offset allmählich erhöht wird, kann über die beschriebenen Vortests ermittelt werden. Sobald die mechanischen Eigenschaften, die bei den Vortests ermittelt werden, und/oder die Objektabmessungen in den Vortests innerhalb des für das in Serienfertigung herzustellende Objekt festgelegten Toleranzbereichs liegen, ist eine Variation der Belichtungsparameter nicht mehr erforderlich. Man kann also anhand der Vortests jenen Zeitpunkt ab Beginn der Belichtung ermitteln, ab dem die Eigenschaften innerhalb des Toleranzbereichs liegen. Dieser Zeitpunkt definiert dann das Ende des vorbestimmten Zeitraums. Erfahrungsgemäß liegt der vorbestimmte Zeitraum in einem Bereich zwischen 1 und 15 Sekunden. Insbesondere bei großen Schichtdicken sind aber auch längere Zeiträume möglich.

Auch wenn vorstehend stets von einer Verfestigung des Baumaterials mittels eines Laserstrahls die Rede war, so ist die vorliegende Erfindung nicht auf diese Art des Wärmeenergieeintrags beschränkt. Die für eine Verfestigung notwendige Wärmeenergie kann in gleicher Weise flächenhaft eingebracht werden, weshalb der Auftreffbereich der zur Verfestigung des Materials verwendeten Strahlung auf die Pulverschicht allgemein als "Verfestigungsstrahlungsauftreffbereich" bezeichnet werden kann. Die Erfindung führt stets dann zu einer vorteilhaften Beschleunigung des Bauvorgangs, wenn nicht alle Stellen des Objektquerschnitts gleichzeitig verfestigt werden, sondern unterschiedliche Stellen des Objektquerschnitts zu unterschiedlichen Zeitpunkten verfestigt werden. Ebenso ist die vorliegende Erfindung nicht auf die Verwendung elektromagnetischer Strahlung beschränkt, sondern kann in gleicher Weise ebenso im Zusammenhang mit Teilchenstrahlung zum Einbringen der Wärmeenergie in das Baumaterial realisiert werden. Schließlich umfasst die vorliegende Erfindung sowohl Verfahren, bei denen das Baumaterial vollständig geschmolzen wird als auch Verfahren, bei denen ein Sintern stattfindet, bei dem die Pulverpartikel lediglich oberflächlich aufgeschmolzen werden.

## Patentansprüche

1. Verfahren zum schichtweisen Aufbau eines dreidimensionalen Objektes (3) aus einem pulverförmigen Baumaterial mittels aufeinanderfolgenden Verfestigens von Schichten des pulverförmigen Baumaterials jeweils an jenen Stellen einer Schicht, die einem Querschnitt des Objekts entsprechen, wobei die Verfestigung durch Einbringen von Wärmeenergie bewerkstelligt wird und das Verfahren für jede Schicht die folgenden Schritte aufweist:
einen Schritt des Bereitstellens einer Schicht eines pulverförmigen Baumaterials auf einer Bauunterlage (2) oder einer bereits zuvor an ausgewählten Stellen verfestigten Schicht,
einen Schritt des Vorerwärmens des aufgetragenen Baumaterials auf eine Vorerwärmungstemperatur, unterhalb der Temperatur, bei der das Material verfestigt wird, und
einen Schritt des Verfestigens der aufgetragenen Schicht mittels elektromagnetischer Strahlung oder Teilchenstrahlung (7), bei dem ein Verfestigungsstrahlungsauftreffbereich nacheinander alle dem Querschnitt des Objektes entsprechenden Stellen der Schicht überstreicht, so dass das Pulver an diesen Stellen durch die durch die Strahlung eingebrachte Wärmeenergie verfestigt wird,
**dadurch gekennzeichnet, dass**
in dem Verfestigungsschritt, der begonnen wird, bevor die aufgetragene Pulverschicht eine gewünschte Arbeitstemperatur erreicht hat, während eines vorbestimmten Zeitraums, dessen Anfang mit dem Beginn des Verfestigungsschritts zusammenfällt, die in dem Verfestigungsstrahlungsauftreffbereich pro Einheitsfläche eingebrachte Wärmemenge mit der Zeit vermindert wird und durch eine in Abhängigkeit von der Zeit monoton abnehmende Funktion beschrieben werden kann,
indem die pro Einheitsfläche eingetragene Wärmemenge durch eine Erniedrigung der Leistungsdichte in dem das Pulver überstreichenden Verfestigungsstrahlungsauftreffbereich vermindert wird und/oder
die pro Einheitsfläche eingetragene Wärmemenge durch eine Erhöhung der Geschwindigkeit, mit der der Verfestigungsstrahlungsauftreffbereich die Pulverschicht überstreicht, vermindert wird.

2. Verfahren nach Anspruch 1, bei dem die Verfestigung mittels mindestens eines Photonen- oder Teilchenstrahls bewerkstelligt wird, der nacheinander auf zu verfestigende Stellen der Schicht gerichtet wird.

3. Verfahren nach Anspruch 1, bei dem die Verfestigung mittels elektromagnetischer Strahlung bewerkstelligt wird und der Verfestigungsstrahlungsauftreffbereich flächig ist.

4. Verfahren nach einem der Ansprüche 1 bis 3, bei dem die monoton abnehmende Funktion empirisch ermittelt wird, indem die Temperaturänderung der Baumaterialschicht bei Erwärmung auf Temperaturen unterhalb der Temperatur, bei der verfestigt wird, in Vorversuchen ermittelt wird, bei denen
- mehrere herzustellende Objekte (3) oder mehrere Prüfkörper hergestellt werden,
- Querschnitte der herzustellenden Objekte (3) oder Prüfkörper zu unterschiedlichen Zeitpunkten ab Beginn des Verfestigungsschrittes einer Schicht verfestigt werden, und
- nach Abschluss des Bauvorgangs eine Eigenschaft der herzustellenden Objekte (3) oder Prüfkörper ermittelt wird, und
- die erwähnte Funktion nach der die pro Einheitsfläche eingebrachte Wärmemenge während des vorbestimmten Zeitraums vermindert wird und die Länge des vorbestimmten Zeitraums auf der Grundlage der ermittelten Eigenschaft der herzustellenden Objekte (3) oder Prüfkörper ermittelt werden.

5. Verfahren nach Anspruch 4, bei dem die an den herzustellenden Objekten (3) oder Prüfkörpern ermittelte Eigenschaft eine mechanische Eigenschaft, eine Abmessung oder ein Parameter zur Beschreibung der Oberflächenqualität ist.

6. Vorrichtung zum schichtweisen Aufbau eines dreidimensionalen Objektes nach einem Verfahren gemäß einem der Ansprüche 1 bis 5, wobei die Vorrichtung aufweist:
eine Bauunterlage (2) zum Tragen des zu bildenden Objektes (3) ;
eine Auftragvorrichtung (11, 12) zum Aufbringen einer Schicht des pulverförmigen Baumaterials auf die Oberfläche des Trägers oder eine bereits zumindest teilweise verfestigten Schicht,
eine Heizvorrichtung (9), welche Wärmeenergie zum flächenhaften Vorwärmen der pulverförmigen Baumaterialschicht liefern kann,
eine Bestrahlungsvorrichtung (6, 8), die elektromagnetische Strahlung oder Teilchenstrahlung (7) emittiert und in der Lage ist, mit einem Verfestigungsstrahlungsauftreffbereich nacheinander alle dem Querschnitt des Objektes entsprechenden Stellen der Schicht so zu überstreichen, dass das Pulver an diesen Stellen durch die durch die Strahlung eingebrachte Wärmeenergie verfestigt wird, und
eine Steuereinrichtung (10), welche die Vorrichtung so steuert, dass nach Absenkung der Bauunterlage (2) um einen einer Schichtdicke entsprechenden Betrag die Auftragsvorrichtung eine Schicht des pulverförmigen Baumaterials auf die Bauunterlage (2) oder eine bereits zuvor an ausgewählten Stellen verfestigte Schicht aufträgt und nachfolgend die Bestrahlungsvorrichtung (6, 8) das pulverförmige Baumaterial in einem Bereich, der einem Querschnitt des Objekts entspricht, verfestigt, indem der Verfestigungsstrahlungsauftreffbereich nacheinander alle dem Querschnitt des Objektes entsprechenden Stellen der Schicht so überstreicht, dass das Pulver an diesen Stellen durch die durch die Strahlung eingebrachte Wärmeenergie verfestigt wird,
**dadurch gekennzeichnet, dass** die Steuereinrichtung (10) die Bestrahlungsvorrichtung (6, 8) so steuert, dass während eines vorbestimmten Zeitraums ab dem Beginn der Verfestigung des Pulvers in einer Pulverschicht durch die Bestrahlungsvorrichtung (6, 8), die begonnen wird, bevor die aufgetragene Pulverschicht eine gewünschte Arbeitstemperatur erreicht hat, die von der Bestrahlungsvorrichtung (6, 8) in dem Verfestigungsstrahlungsauftreffbereich in das pulverförmige Baumaterial pro Einheitsfläche eingebrachte Wärmemenge entsprechend einer in Abhängigkeit von der Zeit monoton abnehmenden Funktion abnimmt,
indem die pro Einheitsfläche eingetragene Wärmemenge durch eine Erniedrigung der Leistungsdichte in dem das Pulver überstreichenden Verfestigungsstrahlungsauftreffbereich vermindert wird und/oder
die pro Einheitsfläche eingetragene Wärmemenge durch eine Erhöhung der Geschwindigkeit, mit der der Verfestigungsstrahlungsauftreffbereich die Pulverschicht überstreicht, vermindert wird.

7. Vorrichtung nach Anspruch 6 mit einer Temperaturmessvorrichtung (14), die geeignet ist, die Temperatur eines Teilbereichs einer Pulverschicht berührungslos zu messen.

## Claims

1. Method for a layer-wise construction of a three-dimensional object (3) from a building material in powder form by means of a sequential solidification of layers of the building material in powder form at those positions of a layer that correspond to a cross-section of the object, wherein the solidification is effected by introducing heat energy and the method for each layer comprises the following steps:
a step of providing a layer of a building material in powder form on a building support (2) or a layer that has been previously solidified at selected positions,
a step of pre-heating the applied building material up to a pre-heating temperature below the temperature at which the material is solidified and
a step of solidifying the applied layer by means of electromagnetic radiation or particle radiation (7), in which step a solidification radiation incidence region sequentially sweeps over all positions of the layer corresponding to the cross-section of the object so that the powder at these positions is solidified by the heat energy introduced by the radiation,
**characterized in that**
in the solidification step, which already starts before the applied powder layer has reached a desired working temperature, the heat energy introduced per unit area in the solidification radiation incidence region is reduced with time during a predetermined period the start of which coincides with the start of the solidification step and can be described by a function monotonically decreasing with time
**in that** the heat amount introduced per unit area is reduced by reducing the radiant flux in the solidification radiation incidence region that is sweeping over the powder and/or
the heat amount introduced per unit area is reduced by an increase of the speed with which the solidification radiation incidence region sweeps over the powder layer.

2. Method according to claim 1, in which the solidification is effected by means of at least one photon or particle beam that is directed sequentially onto positions of the layer to be solidified.

3. Method according to claim 1, in which the solidification is effected by means of electromagnetic radiation and the solidification radiation incidence region is an area.

4. Method according to one of claims 1 to 3, in which the monotonically decreasing function is empirically determined by determining in pre-tests the temperature change of the building material layer when being heated up to temperatures below the temperature at which the solidification is carried out, in which pre-tests
- a plurality of objects (3) to be manufactured or a plurality of test specimens is manufactured,
- cross-sections of the objects (3) to be manufactured or of the test specimens are solidified at different points in time from the start of the solidification step of a layer and
- after the end of the building process a property of the objects (3) or test specimens to be manufactured is determined and
- the mentioned function, according to which the heat amount introduced per unit area is reduced during the predetermined period and the length of the predetermined period are determined based on the determined property of the objects (3) or test specimens to be manufactured .

5. Method according to claim 4, in which the property determined at the objects (3) or test specimens to be manufactured is a mechanical property, a dimension or a parameter for describing the surface quality.

6. Device for a layer-wise construction of a three-dimensional object according to a method according to one of claims 1 to 5, wherein the device comprises:
a building support (2) for carrying the object (3) to be formed;
an application device (11, 12) for applying a layer of the building material in powder form onto the surface of the support or an already at least partially solidified layer,
a heating device (9), which is able to supply heat energy for an areal pre-heating of the building material layer in powder form,
an irradiation device (6, 8) that emits electromagnetic radiation or particle radiation (7) and is able to sweep a solidification radiation incidence region sequentially over all positions of the layer that correspond to the cross-section of the object, such that the powder at these positions is solidified by the heat energy introduced by the radiation, and
a control device (10) that controls the device such that after a lowering of the building support (2) by an amount corresponding to a layer thickness, the application device applies a layer of the building material in powder form onto the building support (2) or a layer that has already been solidified at selected positions, and subsequently the irradiation device (6, 8) solidifies the building material in powder form in a region corresponding to a cross-section of the object by sweeping the solidification radiation incidence region sequentially over all positions of the layer corresponding to the cross-section of the object such that the powder at these positions is solidified by the heat energy introduced by the radiation,
**characterized in that** the control device (10) controls the irradiation device (6, 8) such that during a predetermined period from the start of the solidification of the powder in a powder layer by the irradiation device (6, 8), which already starts before the applied powder layer has reached a desired working temperature, the heat amount introduced per unit area into the building material in powder form by the irradiation device (6, 8) in the solidification radiation incidence region decreases in correspondence to a function decreasing monotonically with time,
**in that** the heat amount introduced per unit area is reduced by reducing the radiant flux in the solidification radiation incidence region that is sweeping over the powder and/or
the heat amount introduced per unit area is reduced by an increase of the speed with which the solidification radiation incidence region sweeps over the powder layer.

7. Device according to claim 6 having a temperature measuring device (14) that is able to make a contactless measurement of the temperature of a partial region of a powder layer.

## Revendications

1. Procédé pour la constitution couche par couche d'un objet tridimensionnel (3) à partir d'un matériau de construction pulvérulent au moyen d'une solidification successive de couches du matériau de construction pulvérulent respectivement aux endroits d'une couche qui correspondent à une section transversale de l'objet, dans lequel la solidification est effectuée par introduction d'énergie thermique et le procédé pour chaque couche présente les étapes suivantes :
une étape de fourniture d'une couche d'un matériau de construction pulvérulent sur une base de construction (2) ou une couche déjà solidifiée préalablement en des endroits sélectionnés,
une étape de préchauffage du matériau de construction appliqué à une température de préchauffage, au-dessous de la température à laquelle le matériau est solidifié, et
une étape de solidification de la couche appliquée au moyen d'un rayonnement électromagnétique ou rayonnement particulaire (7), pour laquelle une zone d'impact de rayonnement de solidification balaye l'un après l'autre tous les endroits de la couche correspondant à la section transversale de l'objet, de sorte que la poudre est solidifiée à ces endroits par l'énergie thermique introduite par le rayonnement,
**caractérisé en ce que**
dans l'étape de solidification, qui a commencé avant que la couche de poudre appliquée n'ait atteint une température de travail souhaitée, pendant une période prédéfinie, dont le commencement coïncide avec le début de l'étape de solidification, la quantité de chaleur introduite dans la zone d'impact de rayonnement de solidification par unité de surface est diminuée avec le temps et peut être décrite par une fonction décroissant de façon monotone en fonction du temps,
du fait que la quantité de chaleur entrée par unité de surface est diminuée par un abaissement de la densité de puissance dans la zone d'impact de rayonnement de solidification balayant la poudre et/ou
que la quantité de chaleur entrée par unité de surface est diminuée par une augmentation de la vitesse à laquelle la zone d'impact de rayonnement de solidification balaye la couche de poudre.

2. Procédé selon la revendication 1, selon lequel la solidification est effectuée au moyen d'au moins un faisceau de photons ou de particules, qui est dirigé l'un après l'autre sur les endroits à solidifier de la couche.

3. Procédé selon la revendication 1, selon lequel la solidification est effectuée au moyen d'un rayonnement électromagnétique et la zone d'impact de rayonnement de solidification est plate.

4. Procédé selon l'une quelconque des revendications 1 à 3, selon lequel la fonction décroissant de façon monotone est déterminée de manière empirique, du fait que la modification de température de la couche de matériau de construction lors d'un chauffage à des températures au-dessous de la température à laquelle la solidification a lieu est déterminée dans des essais préliminaires, pour lesquels
- plusieurs objets (3) à fabriquer ou plusieurs éprouvettes sont fabriqué(e)s,
- des sections transversales des objets (3) à fabriquer ou éprouvettes sont solidifiées à différents moments au début de l'étape de solidification d'une couche, et
- à l'issue du processus de construction, une propriété des objets (3) à fabriquer ou éprouvettes est déterminée, et
- la fonction mentionnée après la quantité de chaleur introduite par unité de surface est diminuée pendant la période prédéfinie et la longueur de la période prédéfinie sont déterminées sur la base de la propriété déterminée des objets (3) à fabriquer ou éprouvettes.

5. Procédé selon la revendication 4, selon lequel la propriété déterminée sur les objets (3) à fabriquer ou éprouvettes est une propriété mécanique, une dimension ou un paramètre pour décrire la qualité de surface.

6. Dispositif pour la constitution couche par couche d'un objet tridimensionnel selon un procédé selon l'une quelconque des revendications 1 à 5, dans lequel le dispositif présente :
une base de construction (2) pour porter l'objet (3) à former ;
un dispositif d'application (11, 12) pour appliquer une couche du matériau de construction pulvérulent sur la surface du support ou une couche déjà au moins en partie solidifiée,
un dispositif de chauffage (9), lequel peut fournir de l'énergie thermique pour le préchauffage surfacique de la couche de matériau de construction pulvérulent,
un dispositif d'irradiation (6, 8), qui émet un rayonnement électromagnétique ou rayonnement particulaire (7) et est en mesure de balayer avec une zone d'impact de rayonnement de solidification l'un après l'autre tous les endroits de la couche correspondant à la section transversale de l'objet, de sorte que la poudre est solidifiée à ces endroits par l'énergie thermique introduite par le rayonnement, et
un système de commande (10), lequel commande le dispositif de sorte qu'après l'abaissement de la base de construction (2) d'une valeur correspondant à une épaisseur de couche, le dispositif d'application applique une couche du matériau de construction pulvérulent sur la base de construction (2) ou une couche déjà solidifiée préalablement à des endroits sélectionnés et ensuite le dispositif d'irradiation (6, 8) solidifie le matériau de construction pulvérulent dans une zone qui correspond à une section transversale de l'objet, du fait que la zone d'impact de rayonnement de solidification balaye l'un après l'autre tous les endroits de la couche correspondant à la section transversale de l'objet, de sorte que la poudre est solidifiée à ces endroits par l'énergie thermique introduite par le rayonnement,
**caractérisé en ce que** le système de commande (10) commande le dispositif d'irradiation (6, 8), de sorte que pendant une période prédéfinie à partir du début de la solidification de la poudre dans une couche de poudre par le dispositif d'irradiation (6, 8), qui a commencé avant que la couche de poudre appliquée n'ait atteint une température de travail souhaitée, la quantité de chaleur introduite par le dispositif d'irradiation (6, 8) dans la zone d'impact de rayonnement de solidification dans le matériau de construction pulvérulent par unité de surface décroit de manière correspondante à une fonction décroissant de façon monotone en fonction du temps,
du fait que la quantité de chaleur entrée par unité de surface est diminuée par un abaissement de la densité de puissance dans la zone d'impact de rayonnement de solidification balayant la poudre et/ou
la quantité de chaleur entrée par unité de surface est diminuée par une augmentation de la vitesse à laquelle la zone d'impact de rayonnement de solidification balaye la couche de poudre.

7. Dispositif selon la revendication 6 avec un dispositif de mesure de température (14), qui est adapté à mesurer sans contact la température d'une zone partielle d'une couche de poudre.
